# EUROPEAN PATENT SPECIFICATION

(11) **EP 0 347 945 B1**
(45) Date of publication and mention of the grant of the patent: **29.09.1993**
(21) Application number: 89111502.4
(22) Date of filing: 23.06.1989
(51) Int. Cl.: C03C 4/08, C03C 3/087

(54) **Yellow-green glass absorbing the whole range of the ultraviolet radiation**
Gelbgrünes Glas, das den ganzen Ultraviolett-Strahlungsbereich absorbiert
Verre jaune-vert absorbant le domaine entier des radiations ultra-violettes

(30) Priority: 23.06.1988 IT 1225
(43) Date of publication of application: 27.12.1989
(73) Proprietor: NORD VETRI S.P.A., I-38057 Pergine Trento (IT)
(72) Inventor: Marchini, Franco, I-14100 Asti (IT)
(74) Representative: Kinzebach, Werner, Dr.

(56) References cited:
- EP-A- 0 037 346
- EP-A- 0 249 651
- FR-A- 1 133 042
- US-A- 4 312 953

## Description

The invention relates to a yellow-green glass absorbing the whole range of the ultraviolet radiation. It can be used to make containers and particularly bottles for wine and other alcoholic drinks.

It is common knowledge that most of the preserved food should be sheltered from light, that is from the photochemical energy combined with short wave-length luminous radiation covering the range within 350 and 450 nm and corresponding to the ultraviolet emission and to the first part of the visible luminous spectrum.

For this reason, in ancient times, preserved products like oil and wine were kept in blind receptacles placed in dark rooms.

To preserve such and similar products, in recent years and nowadays, amber tinted glass containers are used because they absorb a large part of the ultraviolet and luminous visible radiation and also they allow the content to be seen.

The use of this kind of glass is not always welcomed by a number of users who would rather like to adopt green or greenish glass for some kind of food such as wine.

For this reason, some glass manufacturers tried to make a glass paste that, while absorbing a high percentage of the ultraviolet radiation, had such spectrophotometric properties as to appear green and, particularly, having a dominant wavelength within 562 and 567 nm.

Some glass pastes with these characteristics are object of patents like the French patents n° 1.275.824, n° 2.325.614 and 8.007.422 and, in the end, the Italian patent application n° 20824/A/86 on behalf of the AVIR Finanziaria S.p.A. settled in Asti.

The object of the above mentioned patents is relevant either to glass paste blends or to melting processes in presence of oxidizing or reducing agents or to spectrophotometric properties considered as remarkable.

The French patent n° 1.275.824 points out that the ultraviolet radiation is absorbed by glass containing hexavalent chromium that can be retained by using highly oxidized glass paste blends that generate SO₂ and SO₃ during the melting process notwithstanding the drawbacks.

These compounds, in fact, reduce the thermal efficiency and the heat propagation inside the furnace.

The glass thus produced does not contain ferrous iron (Fe⁺⁺) and is therefore provided with a high thermal conductivity causing cooling problems during the forming stage.

Also the French patent n° 2.325.614 favours the absorption of the ultraviolet radiation by means of hexavalent chromium that is obtained, during the melting process, by oxidizing the trivalent chromium.

The advantage of this process is that it does not require expensive or harmful raw materials, while still features a low thermal efficiency of the furnace due to the production of SO₂ and SO₃.

The process described in the French patent n° 8.007.422 provides the formation of sulphides (absorbing the ultraviolet radiation like the hexavalent chromium) by melting the glass paste in a reducing environment instead of an oxidizing one.

The concentration rate of the sulphides ranges within 0,01% and 0,04% while the concentration ratio of Fe₂O₃ and Cr₂O₃ is within 1,8 and 2,2.

The Italian patent application n° 20824/A/86, like the French patent n° 8.007.422, requires a reducing environment during the melting process but the sulphides concentration (responsible for the absorption of the ultraviolet radiation and therefore of the ultraviolet filtering power of the glass) ranges within 0,003% and 0,005% while the Fe₂O₃/Cr₂O₃ ratio is lower than 2 and possibly within 1,4 and 1,6.

In order to provide a green shade with dominant wave-length within 562 and 567 nm it is necessary to make use of compounds such as cobalt oxide with concentrations up to 0,01% and 0,05%.

This invention suggests as important a strict control of the Redox index and especially of the concentration of sulphates in the glass paste that can be varied keeping into account the concentration of the reducing compounds in order to obtain the required Redox index.

The shade of colour can be changed by adding cobalt oxide.

The glasses manufactured making use of any of the above mentioned patents have a shade of colour within the green field, purity around 80% and ultraviolet filtering power within 90% and 97-98% according to tests carried out with test pieces 5 mm thick.

The filtering power drops together with the glass thickness and therefore the protection degree provided by this kind of glasses is uneven and can be inadequate, specially for long preserved food, like some kind of wine, considering that parts of the container are 3 mm. thick or thinner.

The protection against the ultraviolet radiation offered by this kind of glasses could be inadequate for some uses to the point that a considerably increased filtering power would be desirable even at a loss of the colour shade and of the transparency rate.

The present invention brings about a solution of a technical problem till now considered as impossible to solve: that is the production of a see-through glass with dominant wavelength in the green field that can absorb virtually the whole range of the ultraviolet radiation even when rather thin.

Tests carried out on pieces of this glass 5 mm and 3 mm thick have proved that it filters more than 99,5% of the radiation within 350 and 450 nm and therefore its filtering power is virtually complete, even when used for moulding containers requiring, for their shape and weight, a wall thickness down to 3 mm or less.

The spectrophotometric chracteristics of this glass are outstanding and result from the process and of the glass paste blend that has been worked out.

The colour of the glass is green showing a yellow tone, determined by chromium and sulphur compounds, when back-lighted, and brown shades, becoming darker as the thickness increases, when front-lighted.

The main feature of the process for the production of the glass of this invention consists in the measuring out and matching at a time to the glass paste blend dyestuffs typical either of oxidized or reduced colour glasses (in particular champagne green and brown glass respectively) so that almost a neutral environment is provided during the melting process thus achieving good thermal efficiency.

The raw materials to be used are rather cheap and their handling is safe for the operators.

The main advantage of this kind of glass is mainly represented by the absorption of the whole range of the ultraviolet radiation within 350 and 450 nm even with a wall thickness compatible with the traditional shapes of the containers used for wine, oil and similar products.

Last but not least, the content is visible due to the yellow-green colour.

In other words, with the glass according to the present invention it is possible to make transparent containers in any shape, such as wine and oil bottles, which simultaneously offer an almost complete protection from radiations provided with high photochemical energy that could damage preserved food and drinks.

The process to obtain glass provided with the above mentioned properties can be practically put into operation by using, for example, a glass paste blend with the following composition: siliceous sand, sodium carbonate, calcium carbonate and dolomite batched by weight according to the percentage of oxides to be contained in the finished product, a schedule of which is listed below. To these raw materials, dyeing and reducing compounds have to be added like chromite, pyrites and iron oxide (alone or in mixture) Pyrites can be partially or entirely replaced with iron oxide, coal, or blast furnace slag. For instance: 250 to 350 g of chromite; 50 to 70 g of iron oxide and 250 to 350 g of pyrites, preferably 300 g of chromite; 60 g of iron oxide, and 300 g of pyrites are to be added to the glass paste blend necessary for 100 Kg of finished product.

The quantities will be changed each time according to the composition of the raw materials in use, the type of oven and of heating adopted, the melting conditions, the samples taken during the process and the colour shades observed, until a glass with the above mentioned and below specified properties and optic parameters is obtained.

The chemical analysis of samples of glass produced with the above described process is given below in percent by weight of oxides. Changes in the furnace working conditions and in the components of the glass paste blend have been taken into account in order to define the variation range of a product with properties within the above mentioned limits:
SiO₂ = (70 ± 3)%
Al₂O₃ = (1,7 ± 1,5)%
Na₂O = (13,5 ± 2)%
K₂O = (1 ± 1)%
CaO = (9,5 ± 3)%
MgO = (3 ± 3)%
Cr₂O₃ = (0,14 ± 0,03)%
Fe₂O₃ = (0,50 ± 0,10)%; (Fe₂O₃ + FeO given as Fe₂O₃)
SO₃ (total) = (0,05 ± 0,04)%; (SO₃ + S ⁻⁻ given as SO₃)
FeO = (65 ± 15)% of the total Fe₂O₃
S = (70 ± 30)% of the total SO₃,
The spectrophotometric analysis of glass test pieces 3 mm and 5 mm thick having this composition, has given the following results as far as colorimetric parameters are concerned:
- Luminance:: less than 15% for the test piece 5 mm thick
less than 30% for the test piece 3 mm thick
- Purity :: over 90% for the test piece 5 mm thick
over 80% for the test piece 3 mm thick
- Dominant wave-length:: 573 ± 3 nm either for the test piece 5 mm or 3 mm thick
- Filtering power (within 350 and 450 nm ):: more than 99,5% either for the test piece 5 mm or 3 mm thick
The glass with the given composition and manufactured with the above described process is undeniably useful to increase considerably or even to extend beyond any limit the preservation period of food and its use is therefore highly advisable for ageing wines and fine oils.

## Claims

1. Yellow-green glass, absorbing the whole ultraviolet radiation, which has the following chemical composition given in percent by weight of oxides:
SiO₂ = 67-73%
Al₂O₃ = 0.2-3.2%
Na₂O = 11.5-15.5%
K₂O = 0-2%
CaO = 6.5-12.5%
MgO = 0-6%
Cr₂O₃ = 0.11-0.17%
Fe₂O₃ (total) = 0.4-0.6%; (Fe₂O₃ + FeO given as Fe₂O₃)
SO₃ (total) = 0.01-0.09%; (SO₃ + S⁻⁻ given as SO₃)
FeO = 50-80% of the total Fe₂O₃
S = 40-100% of the SO₃ and
which has the following colorimetric parameters:
Luminance: less than 15% for the test piece 5 mm thick
less than 30% for the test piece 3 mm thick
Purity : more than 90% for the test piece 5 mm thick
more than 80% for the test piece 3 mm thick
Dominant wave length: 573 + 3 nm for test pieces either 5 or 3 mm thick
Filtering power (within 350 and 450 nm): more than 99.5% for test pieces either 5 or 3 mm thick.

2. A process for preparing the glass of claim 1, which comprises feeding a continuous melting furnace with a glass paste blend consisting essentially of the raw materials siliceous sand, sodium carbonate, calcium carbonate, dolomite and of the dyeing compounds chromite, iron oxide and pyrites, that can be partially or totally replaced by iron oxide, coal or blast furnace slag, the dyeing compounds being added to the raw materials for 100 kg of glass in the following quantities; chromite 300 g, iron oxide 60 g, pyrites 300g and carrying out the melting process under an essentially neutral environment by suitably adjusting the amounts of the dyeing compounds.

3. The use of the yellow-green glass of claim 1 for the manufacture of food and drink containers.

4. Containers made of the yellow-green glass according to claim 1.

## Patentansprüche

1. Gelb-grünes Glas, das die gesamte ultraviolette Strahlung absorbiert, die folgende chemische Zusammensetzung, ausgedrückt in Gewichtsprozent der Oxide besitzt:
SiO₂ = 67-73%
Al₂O₃ = 0,2-3,2%
Na₂O = 11,5-15,5%
K₂O = 0-2%
CaO = 6,5-12,5%
MgO = 0-6%
Cr₂O₃ = 0,11-0,17%
Fe₂O₃ (gesamt) = 0,4-0,6%; (Fe₂O₃ + FeO ausgedrückt als Fe₂O₃)
SO₃(gesamt) = 0,01-0,09%; (SO₃+ S⁻⁻ ausgedrückt als SO₃)
FeO = 50-80% des gesamten Fe₂O₃
S = 40-100% des SO₃
und das die folgenden kolorimetrischen Parameter aufweist:
Luminanz: weniger als 15% bei einem Teststück von 5 mm Dicke
weniger als 30% bei einem Teststück von 3 mm Dicke
Reinheit: mehr als 90% bei einem Teststück von 5 mm Dicke
mehr als 80% bei einem Teststück von 3 mm Dicke
Dominante Wellenlänge: 573 ± 3 nm bei Teststücken von 5 oder 3 mm Dicke
Filtervermögen (im Bereich von 350 bis 450 nm): mehr als 99,5 % bei Teststücken von 5 oder 3 mm Dicke.

2. Verfahren zur Herstellung des Glases nach Anspruch 1, wobei man einen kontinuierlichen Schmelzofen mit einem Glaspastengemenge beschickt, das im wesentlichen besteht aus den Rohstoffen kieselsäurehaltiger Sand, Natriumcarbonat, Calciumcarbonat, Dolomit und aus den färbenden Verbindungen Chromit, Eisenoxid und Pyriten, welche teilweise oder vollständig durch Eisenoxid, Kohle oder Hochofenschlacke ersetzt werden können, wobei die färbenden Verbindungen auf 100 kg Glass den Rohstoffen in den folgenden Mengen zugesetzt werden: Chromit 300 g, Eisenoxid 60 g, Pyrite 300 g, und das Schmelzverfahren unter im wesentlichen neutralem Milieu unter entsprechender Anpassung der Mengen der färbenden Verbindungen durchführt.

3. Verwendung des gelb-grünen Glases nach Anspruch 1 zur Herstellung von Nahrungsmittel- und Getränkebehältern.

4. Behälter, hergestellt aus dem gelb-grünen Glas nach Anspruch 1.

## Revendications

1. Verre iaune-vert absorbant l'entier domaine des rayonnements ultra-violets, qui a la suivante composition chimique, exprimée en pourcentage du poids des oxydes:
SiO₂ = 67-73%
Al₂O₃ = O,2-3,2%
Na₂O = 11,5-15,5%
K₂O = O-2%
CaO = 6,5-12,5%
MgO = O-6%
Cr₂O₃ = O,11-O,17%
Fe₂O₃(total)= O,4-O,6%;(Fe₂O₃+FeO formulés comme Fe₂O₃)
SO₃ (total)= O,O1-O,O9%;(SO₃ + S⁻⁻formulés comme SO₃)
FeO = 5O-8O% du Fe₂O₃ total
S = 4O-1OO% du SO₃ et
qui a les suivants paramètres colorimetriques:
Luminance: inférieure à 15% pour les éprouvettes de 5 mm. d'épaisseur
inférieure à 30% pour les éprouvettess de 3 mm. d'épaisseur
Pureté : supérieure à 9O% pour les éprouvettes de 5 mm. d'épaisseur
supérieure à 8O% pour les éprouvettes de 3 mm. d'épaisseur
Longueur d'onde dominante: 573±3 mm. soit pour éprouvettes de 5, soit pour éprouvettes de 3 mm.
Pouvoir filtrant (de 35O à 45O nm.): supérieur à 99,5% soit pour éprouvettes de 5, soit pour éprouvettes de 3 mm.

2. Procédé pour la préparation du verre de la revendication 1, qui comprend l'alimentation d'un four à fusion continue avec un mélange de pâte de verre, qui consiste essentiellement à matière première: sable silicieux, carbonate de sodium, carbonate de calcium, dolomite et de composés colorants: chromite, oxyde de fer et pyrite, qui peut être partiellement ou totalement remplacée par oxyde de fer, charbon ou laitier de haut forneau, lesdits composés colorants étant ajoutés à la matière première selon les suivantes quantités: chromite 300 gr., oxyde de fer 6O gr., pyrites 3OO gr., et réalisant le procédé de fusion dans une ambiance essentiellement neutre, avec l'opportun réglage des quantités des composés colorants.

3. L'utilisation du verre jaune-vert de la revendication 1 pour la production de containers de aliments et de boissons.

4. Containers faits de verre jaune-vert selon la revendication 1.
